# EUROPEAN PATENT SPECIFICATION

(11) **EP 0 567 691 B1**
(45) Date of publication and mention of the grant of the patent: **21.02.1996**
(21) Application number: 92201192.9
(22) Date of filing: 28.04.1992
(51) Int. Cl.: F02B 29/00, F02B 33/44

(54) **Intake air flow increasing device for combustion engine**
Anordnung zur Erhöhung des Luftdurchsatzes für Brennkraftmaschine
Dispositif accélérateur de débit d'air pour moteur à combustion interne

(43) Date of publication of application: 03.11.1993
(73) Proprietor: Sandou, Michimasa, Kiryu-Shi, Gunma-Ken 376 (JP)
(72) Inventor: Sandou, Michimasa, Kiryu-Shi, Gunma-Ken 376 (JP)
(74) Representative: Iemenschot, Johannes Andreas, Ir.

(56) References cited:
- FR-A- 2 396 869
- FR-A- 2 474 583
- FR-A- 2 484 535
- PATENT ABSTRACTS OF JAPAN vol. 10, no. 291 (M-522)(2347) 3 October 1986 & JP-A-61 106 921 (MITSUBISHI HEAVY IND LTD)

## Description

### FIELD OF THE INVENTION

This invention relates to a combustion engine to be mounted in a vehicle such as a truck or a passenger car,and more particularly to an intake air flow increasing device for a combustion engine, in which power performance of the combustion engine can be improved by improving the combustion efficiency while preventing exhaustion of harmful substances by suppressing generation of black smoke generated in a combustion chamber.

### PRIOR ART

As a widely used combustion engine to be mounted in a vehicle such as a truck or a passenger car, there is a gasoline engine, in which mixture of natural intake air and fuel in a carburettor is introduced into a combustion chamber to let it burn therein for moving a piston up and down with an effect of expansion due to the combustion, or a diesel engine in which, after compressed intake air is sent into a combustion chamber, fuel is sprayed to the intake air for combustion of the fuel by making use of compression heat of the intake air, so that a piston moves up and down with an expanding action of the intake air.

In recent years, to accomplish the improvement of the combustion efficiency and acceleration of speed, a supercharger, such as a turbocharger is widely mounted at a combustion engine.

However, according to conventional supercharger, such as a turbocharger, increase of intake air supplied to a combustion chamber is obtained by a rotation of a turbine connected to a blower which is rotated using a pressure of exhaust gas from a engine. Thus when an acceleration pedal is trod to accelerate the vehicle while running, since the blower does not work until a quantity of the exhaust gas goes up to a certain level due to increase of a rotation speed of the engine, there is a small extent of time delay between tread of pedal and acceleration of the speed .Though this type of device has an advantage while running with a high speed keeping a rotation speed of the engine at higher level, in case of running with a low speed ,this type of device has the following disadvantages.

At the time of running with a low speed, since acceleration of speed and braking are frequently used in turn, if an acceleration pedal is trod, the pedal is returned before the device starts working. Thus this type of device does not work well while running with a low speed.

Further, when acceleration and braking are frequently used in turn, a quantity of unburnt fuel increases in associtated with incomplete combustion. In addition, a quantity of black smoke exhausted to outside of the vehicle increases, which has been a serious environmental problem because various types of harmful substance are included in the black smoke.

### SUMMARY OF THE INVENTION

An object of this invention is to provide an intake air flow increasing device to solve the problem of incomplete combustion in conventional types of combustion engine.

A main object of this invention is to provide an intake air flow increasing device for a combustion engine, wherein a stable combustion state can always be maintained and the combustion efficiency can be improved, when accelerating the vehicle, regardless of the engine type and its displacement, while generation of the black smoke can be suppressed to maintain good environmental conditions.

A further object of this invention is to provide an intake air flow increasing device for a combustion engine, wherein a stable combustion efficiency can be improved, when accelerating the vehicle, regardless of such conditions as weight of heavy things loaded in the vehicle or running uphill.

In this invention, an air ejecting body for compressed air is provided forward of an air intake ,and a main conducting path for compressed air and an auxiliary conducting path for compressed air both of which are connected to a compressed air discharge opening are connected to the air ejecting body. A main switching control valve and an auxiliary switching control valve are provided between the compressed air discharge opening and the main conducting path/ the auxiliary conducting path respectively. The main switching control valve can be opened or closed in accordance with switching operations of speed change mechanism, while the auxiliary switching control valve can work independently from operations of the aforesaid main switching control valve.

With this configuration, when a vehicle is accelerated while running on flat ground, shortage of intake air is made up for by mixture of compressed air jetted from the main conducting path and intake air which is swallowed up by compressed air. In addition, when a vehicle with heavy things loaded or it runs uphill, decrease of an absolute volume of intake from the front side of the vehicle which inevitablly occurs due to reduction of the vehicle's running speed, can be made up for by compressed air from the auxiliary conducting path. Furthermore, combustion and expanding action in the engine suited to running condition of the vehicle as well as to weight of loaded things can be maintained in a stable state. Furthermore, generation of exhaust black smoke can be suppressed for maintenance of good environmental conditions. The above effects can be attained ragardless of such conditions as weight of heavy things loaded on the vehicle or running uphill, and without adversely affecting to additional device such as a turbo system.

### BRIEF DESCRIPTION OF THE DRAWINGS

FIG. 1 is a block diagram showing key sections.
FIG. 2(a) is an enlarged front view of an air ejecting body
FIG. 2(b) is an enlarged side view of an air ejecting body
FIG. 3 is a drawing showing an intake air flow of compressed air and natural intake air.

### DETAILED DESCRIPTION OF THE PREFERRED EMBODIMENTS

To describe this invention more detailedly, preferred embodiments of this invention will be described in relation to a diesel engine as a preferable example of a combustion engine with reference to the accompanying drawings.

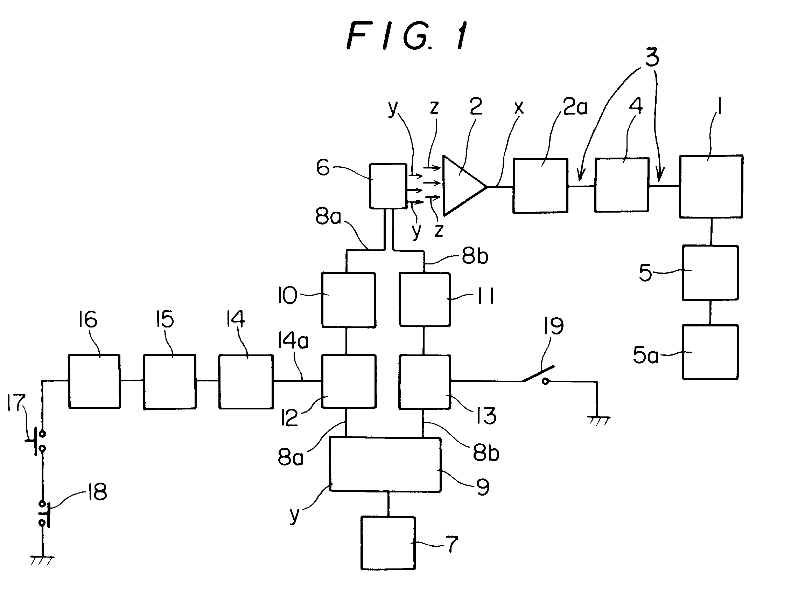

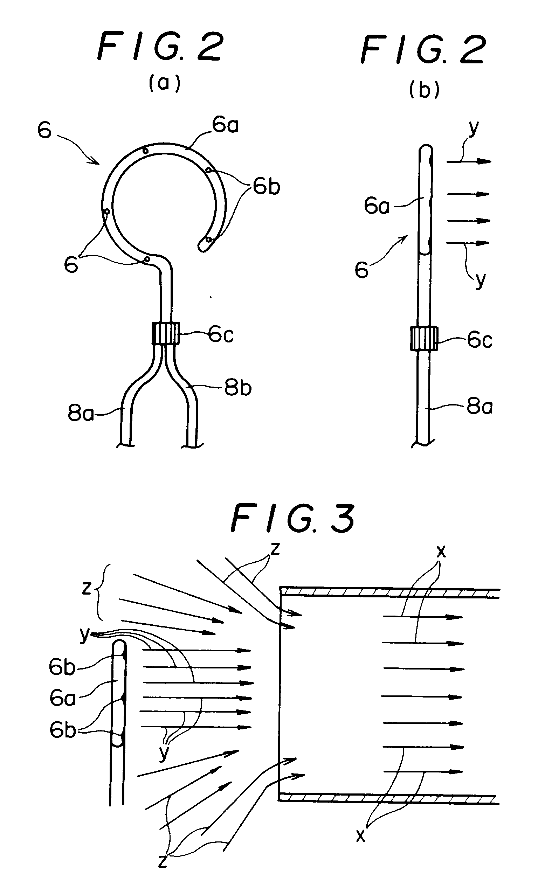

Reffering to Figures 1 to 2 , the reference numeral 1 denotes a diesel engine mounted under a bonnet of a vehicle not shown therein. In the diesel engine 1, intake air x is introduced from an air intake opening 2 with an air cleaner 2a arranged therein into a combustion chamber (not shown) via an intake manifold 4 of the diesel engine 1 provided in an intake air conducting path 3 and compressed in the chamber. Fuel is supplied from a fuel tank 5a and sprayed to the intake air x in the combustion chamber by a fuel injection mechanism 5. Combustion and expansion are effected by the compression heat of said intake air x.

An air ejecting body 6 is provided forward of the air intake 2, and compressed air y produced by an air compressing mechanism 7 is jetted from the air ejecting body 6 toward the air intake opening 2.

The air ejecting body 6 is made to have a ring-shaped portion 6a with a plurality of air ejecting nozzles 6b, 6b....being arranged therein with a constant interval. The air ejecting body 6 is connected to a main compressed air conducting path 8a and an auxiliary conducting path 8b for compressed air y via a connector 6c whereby a discharge side of aforesaid conducting paths are united. A main switching control valve 12 and an auxiliary switching valve 13 are provided between each conduncing path 8a, 8b and an air tank 9 of the air compressing mechanism 7 respectively. An air compressing adjustment 10,11 is provided in the main compressed air conducting path 8a and the auxiliary compressed air conducting path 8b respectively. A pressure of compressed air y in a main conducting path 8a is maintained at higher level than that of an auxiliary conducting path 8b by the air compressing adjustment 10,11.

The switching control valve 12 is opened or closed according to a switching control signal 14a transmitted from a control circuit 14 to discharge the compressed air from the compressed air tank 9 or stop the operation. A clutch switch 17 and a brake switch 18 are serially connected via a time limit timer circuit 15 and a delay timer circuit 16 to the aforesaid control circuit 14.

The clutch switch 17 and the brake switch 18 open or close according to an operation to tread a clutch pedal and a brake pedal of a vehicle not shown respectively. The clutch switch 17 comprise a normal open contact, while the brake switch 18 comprises a normal close contact. When the clutch is trod while the vehicle is running , the clutch switch 17 is closed so that a low level signal is sent to the delay timer circuit 16. When the brake pedal is trod, the brake switch 18 is opened so that transmission of the low level signal is suppressed ragardless of whether the aforesaid clutch switch 17 has been opened or closed.

On the other hand, a switching lever switch 19 provided in driving control section of the vehicle is connected to the auxiliary switching control valve 13 of the auxiliary conducting path 8b, so that the auxiliary switching control valve 13 is to be opened for a certain peoriod of time by operation of the swithcing lever switch 19.

In the above configuration, when the clutch pedal is trod and the speed change mechanism not shown is kept in a switching-ready state, the clutch switch 17 is closed and the low level signal is sent to the delay timer circuit 16. Then, the aforesaid low level signal is delayed by a specified period of time t1 in the delay timer circuit 16, a connecting operation for speed change with a clutch pedal and a speed-change lever is effected within this specified time t1. Then, the low level signal is kept in a low level state by the time limit timer by a specified period of time t2 and then sent to the control circuit 14. In the control circuit 14, the low level signal is converted to a switching control signal 14a to keep the switching control valve 12 in an open state for the specified period of time t2. Thus the compressed air y being discharged from the compressed air tank 9 to the air intake 2 through the air ejecting body 6.

At that time, an air z intaking from the air intake 2 due to negative pressure generated by downward movement of the piston(not shown) of the engine 1 is swallowed up to the compressed air y which is at an extremely high speed, so that a large quantity of the intake air x is introduced to the combustion chamber of the engine 1. Thus, when the fuel which injection rate increases in accordance with the operation to tread the acceleration pedal is sprayed to the combustion chamber ,combustion and expansion are effected by the compression heat of the intake air x.

Consequently , since the air intake flow increases due to increase of the compressed air y in association with increase of the injection rate of fuel ,generation of unburnt fuel is suppressed in the combustion process , so that a quantity of unburnt fuel discharged as black smoke decreases, and black smoke discharged to outside of the vehicle becomes invisible.

On the other hand, when the vehicle runs on uphill or a heavy thing is loaded on the vehicle, torque required to the engine 1 inevitably increases, and also acceleration of the vehicle is not effected smoothly even if the acceleration pedal is trod, so that an absolute volume of the intake air x decreases and combustion in the engine 1 becomes incomplete in spite of increase of the injecting fuel ,thus a quantity of unburnt fuel being temporally increased.

In this case, by setting the switching lever switch 19 provided in the driving control section of the vehicle in a closing position, the auxiliary switching control valve 13 of the auxiliary conducting path 8b is opened, and because of the compressed air y injected through the auxiliary conducting path 8b, a quantity of the intake air x from the air intake 2 increases. Thus, shortage of the intake air x due to reduction thereof is supplemented, combustion and expanding action in the engine 1 are effected in a good balance, and incomplete combustion is eliminated, thus permitting suppression of the exhaust of harmful substances included in the black smoke.

It is to be noted that, although above description concerns the air ejecting body 6 having a ring-shaped portion 6a with ejecting nozzles being arranged therein with a constant interval , this type of air ejecting body is adapted for a vehicle with a large displacement, namely for a vehicle which requires a large amount of intake air. Thus in case of vehicle with a small displacement, the same effects can also be obtained with a cylindrical air ejecting body being arranged therein with air ejecting nozzles 6b,6b......

Also, it is to be noted that, the same effects can also be obtained in case of a gasoline engine by arranging the carburettor at a middle point of the path from the compressed air conducting path 3 and the intake manifold 4, so that enough intake air flow is ensured, even if supply of fuel to the carburettor is made suddenly in response to the treading of the acceleration pedal for accelerating the vehicle.

As clearly shown in the above description, according to this invention, the following effects can be achieved.
(1) According to this invention, an intake air flew into an engine can be increased without adversely affecting operations of additional devices such as a turbocharger ,responsiveness of an air charging function is improved, and at the time of accelerating the vehicle, combustion and expansion action in the engine can be made in a stable state in accordance with such conditions as weight of heavy things loaded in the vehicle or running uphill, so that power performance of the engine can be increased by improving the combustion efficiency. At the same time, the intake air flow increasing device of this invention is easily mounted on the vehicle without any complicated arrangement of conventional intake system. Thus, with cheaper cost, intake system is greatly improved.
(2) Since the discharge side of the main conducting path and the auxiliary conducting path are united so that single air ejecting body is connected to the discharge side of the conducting path, stable power performance of an engine can always be drawn forth by supplying compressed air from the auxiliary conducting path even under the running conditions where it is difficult to make up for shortage of intake air flow rate only with compressed air from the main compressed air conducting path.
(3) Since the air compressing adjustment keeps a pressure of compressed air in the conducting path at appropriate level in accordance with vehicle's displacement or types of engine,the intake air flow increasing device of this invention can be utilized for various types of vehicles.
(4) Since the air ejecting nozzles of the air ejecting body face the air intake side and compressed air can be supplied at an extremely high speed , the amount of natural intake air swallowed up to compressed air increases so that a large amount of intake air can be supplied to the engine timely.
(5) Since the air ejecting body is made to have a ring-shaped portion with air ejecting nozzles, increase of the intake air flow is achieved smoothly without interrupting the flow of natural intake air.

### INDUSTRIAL UTILITY

As the intake air flow increasing device for a combustion engine according to this invention can maintain a stable combustion state and improve the combustion efficiency when accelerating a vehicle ,regardless of heavy things loaded on the vehicle or running conditions such as running uphill, it can be used in all vehicles with a combustion engine mounted therein.

## Claims

1. An intake air flow increasing device of a combustion engine comprising :
a main compressed air conducting path being linked to a compressed air discharge opening of an air compressing mechanism via a main switching control valve wherein said main switch control valve is opened and closed according to switching operations of a speed change mechanism linked to said combustion engine;
an auxiliary compressed air conducting path being linked to said compressed air discharge opening via an auxiliary switching control valve wherein said auxiliary switching control valve can work independently from opening/closing operations of said main switching control valve; and
an air ejecting body being connected to a discharge side of each said compressed air conducting path and being provided forward of an intake air opening connected to an air cleaner of said combustion engine.

2. The intake air flow increasing device of a combustion engine according to claim 1, wherein a discharge side of said main compressed air conducting path and a discharge side of said auxiliary compressed air conducting path are united and single said air ejecting body is linked to a discharge side of said united compressed air conducting path.

3. The intake air flow increasing device of a combustion engine according to claim 1 or 2, wherein an air compressing adjustment adjusting a pressure of compressed air is provided in said main compressed air conducting path and said auxiliary compressed air conducting path respectively.

4. The intake air flow increasing device of a combustion engine according to claim 1 or 3, wherein air ejecting nozzles of said air ejecting body face said intake air opening.

5. The intake air flow increasing device of a combustion engine according to claim 1 or 4, wherein said air ejecting body is made to have a ring-shaped portion with air ejecting nozzles therein.

## Patentansprüche

1. Vorrichtung zur Erhöhung der Ansaugluftströmung eines Verbrennungsmotors mit:
einem Hauptdruckluftführungsweg, der mit einer Druckluftauslaßöffnung eines Luftverdichtermechanismus über ein Hauptschaltsteuerventil gekoppelt ist, wobei das Hauptschaltsteuerventil in Übereinstimmung mit Schaltvorgängen eines mit dem Verbrennungsmotor gekoppelten Gangwechselmechanismus geöffnet und geschlossen wird;
einem Hilfsdruckluftführungsweg, der mit der Druckluftauslaßöffnung über ein Hilfsschaltsteuerventil gekoppelt ist, wobei das Hilfsschaltsteuerventil unabhängig von Öffnungs-/Schließvorgängen des Haupschaltsteuerventils arbeiten kann; und
einem Luftausstoßkörper, der mit einer Auslaßseite jedes Druckluftführungswegs verbunden und vor einer Ansaugluftöffnung vorgesehen ist, die mit einem Luftfilter des Verbrennungsmotors verbunden ist.

2. Vorrichtung zur Erhöhung der Ansaugluftströmung eines Verbrennungsmotors nach Anspruch 1, wobei eine Auslaßseite des Hauptdruckluftführungswegs und eine Auslaßseite des Hilfsdruckluftführungswegs vereinigt sind und ein einziger Luftausstoßkörper mit einer Auslaßseite des vereinigten Druckluftführungswegs gekoppelt ist.

3. Vorrichtung zur Erhöhung der Ansaugluftströmung eines Verbrennungsmotors nach Anspruch 1 oder 2, wobei ein Luftverdichtungseinsteller, der einen Druck der Druckluft einstellt, in dem Hauptdruckluftführungsweg bzw. dem Hilfsdruckluftführungsweg vorgesehen ist.

4. Vorrichtung zur Erhöhung der Ansaugluftströmung eines Verbrennungsmotors nach Anspruch 1 oder 3, wobei Luftausstoßdüsen des Luftausstoßkörpers zu der Ansaugluftöffnung zeigen.

5. Vorrichtung zur Erhöhung der Ansaugluftströmung eines Verbrennungsmotors nach Anspruch 1 oder 4, wobei der Luftausstoßkörper so hergestellt ist, daß er einen ringförmigen Abschnitt mit Luftausstoßdüsen darin hat.

## Revendications

1. Dispositif accélérateur de débit d'air d'admission pour moteur à combustion, comprenant :
un conduit principal d'air comprimé relié à un orifice de refoulement d'air comprimé d'un mécanisme de compression d'air, par l'intermédiaire d'une vanne de commande principale commutable, ladite vanne de commande principale commutable étant ouverte et fermée conformément à des manoeuvres de commutation d'un mécanisme de changement de vitesse relié audit moteur à combustion ;
un conduit auxiliaire d'air comprimé relié à l'orifice de refoulement d'air comprimé par l'intermédiaire d'une vanne de commande auxiliaire commutable, ladite vanne de commande auxiliaire commutable pouvant fonctionner indépendamment des opérations d'ouverture/fermeture de ladite vanne de commande principale commutable ; et
un élément d'éjection d'air connecté à un côté de sortie de chaque dit conduit d'air comprimé, et étant placé à l'avant d'une ouverture d'air d'admission connectée à un épurateur d'air dudit moteur à combustion.

2. Dispositif accélérateur de débit d'air d'admission d'un moteur à combustion suivant la revendication 1, dans lequel un côté de sortie dudit conduit principal d'air comprimé et un côté de sortie dudit conduit auxiliaire d'air comprimé sont réunis et un dit élément unique d'éjection d'air est relié à un côté de sortie dudit conduit commun d'air comprimé.

3. Dispositif accélérateur de débit d'air d'admission d' un moteur à combustion suivant la revendication 1 ou 2,, dans lequel un moyen de réglage de compression d'air, pour régler une pression d'air comprimé, est prévu dans ledit conduit principal d'air comprimé et dans ledit conduit auxiliaire d'air comprimé, respectivement.

4. Dispositif accélérateur de débit d'air d'admission d'un moteur à combustion suivant la revendication 1 ou 3, dans lequel des buses d'éjection d'air dudit élément d'éjection d'air font face à ladite ouverture d'air d'admission.

5. Dispositif accélérateur de débit d'air d'admission d'un moteur à combustion suivant la revendication 1 ou 4, dans lequel ledit élément d'éjection d'air est en forme d'anneau portant lesdites buses d'éjection d'air.
